# EUROPÄISCHE PATENTSCHRIFT

(11) **EP 1 526 118 B1**
(45) Veröffentlichungstag und Bekanntmachung des Hinweises auf die Patenterteilung: **23.08.2006**
(21) Anmeldenummer: 04024143.2
(22) Anmeldetag: 09.10.2004
(51) Int. Cl.: C03B 7/086

(54) **Vorrichtung zum Auf- und Abbewegen von Plungern in einem Speiserkopf für eine Glasformmaschine**
Apparatus for raising and lowering plungers in a feeder for a glas forming machine
Appareil pour soulever et abaisser des plongeurs dans un distributeur pour une machine à façonner le verre

(30) Priorität: 25.10.2003 DE 20316501 U
(43) Veröffentlichungstag der Anmeldung: 27.04.2005
(73) Patentinhaber: Heye International GmbH, 31683 Obernkirchen (DE)
(72) Erfinder: Bögert, Hermann, 31749 Auetal (DE); Hermening, Heinz, 32457 Porta Westfalica (DE)
(74) Vertreter: Callies, Rainer Michael

(56) Entgegenhaltungen:
- DE-A- 4 231 455
- US-A- 2 749 665
- US-A- 3 201 218
- US-A- 4 551 163
- US-A- 5 735 926

## Beschreibung

Die Erfindung betrifft eine Vorrichtung nach dem Oberbegriff des Anspruchs 1.

Bei einer bekannten Vorrichtung dieser Art (DE 35 22 575 C2 und die entsprechende US 4 551 163 A) sind der Plungerhalter, die Tragsäule und ein die Mutter und mit der Führungsschiene zusammenwirkende Führungsrollen tragender, rückwärtiger Fortsatz einstückig ausgebildet. Diese Bauweise ist aufwändig und kompliziert und gestattet nicht die Nachrüstung bestehender Plungerantriebsvorrichtungen.

Eine solche bestehende Plungerantriebsvorrichtung ist der US 3 201 218 A zu entnehmen.

Mit dem Gegenstand der DE 42 31 455 C2 wurde vorgeschlagen, einen solchen bekannten Plungerantrieb durch einen Spindelantrieb zu verbessern, wobei die Spindel durch einen um eine waagerechte Achse schwenkbaren Elektroservomotor angetrieben werden sollte.

Aus der EP 0 789 002 B1 ist es an sich bekannt, an einem einen Elektroservomotor und eine dadurch angetriebene Spindel tragenden stationären Rahmen an zwei im Abstand voneinander angeordneten Führungssäulen einen auf und ab bewegbaren zweiten Rahmen zu lagern. Der zweite Rahmen trägt einerseits die mit der Spindel im Eingriff stehende Mutter und andererseits den Plungerhalter. Dieser Vorschlag weist prinzipiell die gleichen Nachteile auf wie der Gegenstand der US 4 551 163 A.

Der Erfindung liegt die Aufgabe zugrunde, den Plungerantrieb zu vereinfachen und auch bestehende, bisher auf andere Weise angetriebene Plungerantriebe nachzurüsten.

Diese Aufgabe ist durch die Merkmale des Anspruchs 1 gelöst. Die Konsole kann verhältnismäßig klein und leicht ausgebildet sein und ohne Schwierigkeiten an der Tragsäule angelenkt werden. Dabei kann es sich auch um die Tragsäule eines bestehenden Plungerantriebs handeln. Der Raumbedarf ist sehr gering. Alle Teile der Vorrichtung sind für Wartung und ggf. Reparatur leicht zugänglich.

Die Merkmale des Anspruchs 2 bieten betriebliche Vorteile.

Gemäß Anspruch 3 ergibt sich eine sichere Führung der Konsole an dem Rahmen.

Die Merkmale des Anspruchs 4 führen zu einem Gewichtsausgleich der Vorrichtung und entlasten den Elektroantrieb. Dadurch werden vergleichsweise hohe Betriebsgeschwindigkeiten mit geringem baulichen Aufwand ermöglicht.

Gemäß Anspruch 5 lässt sich eine unerwünschte Drehung der Vorrichtung um die Längsachse der Tragsäule wirksam verhindern.

Mit den Merkmalen des Anspruchs 6 kann mit hoher Betriebssicherheit eine Höhengrundeinstellung der Plunger vorgenommen werden. Die Welle ist vorzugsweise als sogenannte Vielkeilwelle ausgebildet. Die Welle lässt sich z.B. durch ein Handrad hin und her drehen.

Gemäß Anspruch 7 ist die Höhengrundeinstellung mit verhältnismäßig geringem Kraftaufwand reibungsarm vorzunehmen.

Durch die Merkmale des Anspruchs 8 lässt sich eine einmal gefundene Höhengrundeinstellung auf einfache Weise fixieren.

Durch die Merkmale des Anspruchs 9 ist eine in senkrechter Richtung spielfreie Bewegungsübertragung von der Konsole auf die Tragsäule gewährleistet, während sich die Tragsäule gegenüber der Konsole in waagerechter Richtung in engen Grenzen verschieben kann. Dies dient dazu, Zwängungen im Übertragungsstrang zu vermeiden.

Gemäß Anspruch 10 lässt jeder Aufnahmeschlitz sich auf einfache und sichere Weise verschließen. Das Füllstück kann in dem Aufnahmeschlitz z.B. durch eine Durchgangsschraube gehalten sein. Insbesondere kann für jeden Aufnahmeschlitz jeweils ein Füllstück vorgesehen sein, möglich wäre aber auch ein gemeinsames Füllstück für die Aufnahmeschlitze.

Diese und weitere Merkmale werden nachfolgend anhand des in den Zeichnungen dargestellten Ausführungsbeispiels näher erläutert. Es zeigt
Fig. 1 einen teilweisen Längsschnitt durch eine Vorrichtung,
Fig. 2 die Schnittansicht gemäß Linie II-II in Fig. 1 in vergrößerter Darstellung und gemäß Linie II-II in Fig. 3,
Fig. 3 die teilweise Schnittansicht gemäß Linie III-III in Fig. 2,
Fig. 4 die Schnittansicht gemäß Linie IV-IV in Fig. 1 in vergrößerter Darstellung,
Fig. 5 die Schnittansicht gemäß Linie V-V in Fig. 1 in vergrößerter Darstellung und
Fig. 6 die Ansicht gemäß Linie VI-VI in Fig. 5.

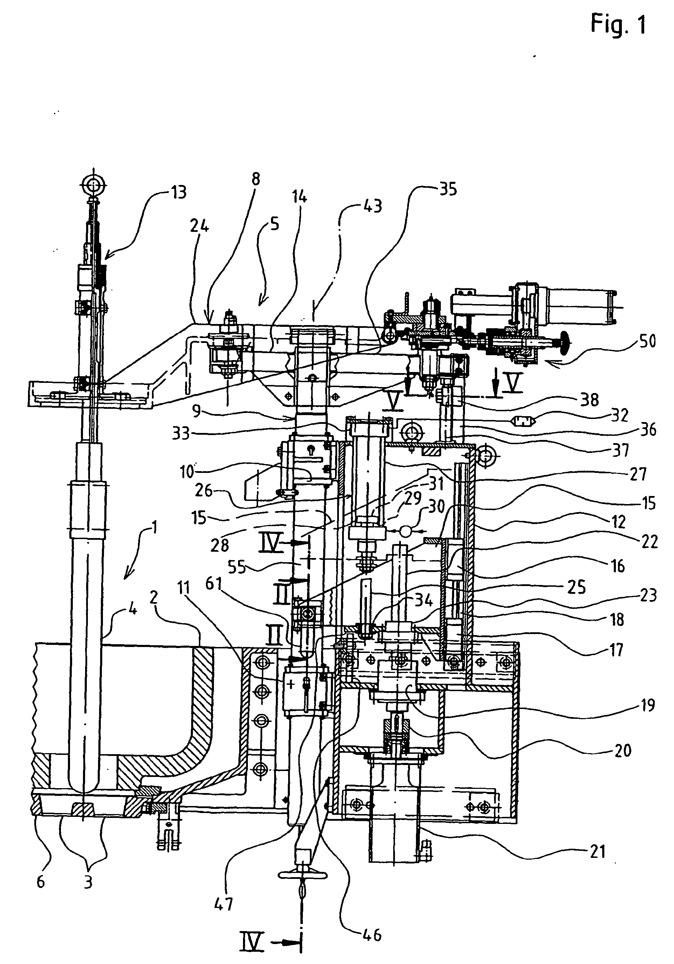

In Fig. 1 ist teilweise ein Speiser 1 für eine Glasformmaschine (nicht gezeigt) dargestellt. Der Speiser 1 weist einen Speiserkopf 2 mit einem zweifachen Tropfenauslass 3 in einemTropfring 6 und einen Plunger 4 auf.

Die erfindungsgemäße Vorrichtung zum periodischen senkrechten Auf- und Abbewegen des Plungers 4 ist mit 5 bezeichnet.

Die Vorrichtung 5 weist einen sich im Wesentlichen waagerecht erstreckenden Plungerhalter 8 auf. Der Plungerhalter 8 weist in dem hier dargestellten Ausführungsbeispiel ein erstes Teil 14 und ein zweites Teil 24 auf. Das erste Teil 14 ist an einer Tragsäule 9 befestigt, die mittels zweier Lagerbuchsen 10 und 11 senkrecht auf und ab bewegbar an einem vorrichtungsfesten Rahmen 12 gelagert ist. Das zweite Teil 24 ist an dem ersten Teil 14 angelenkt. Der Plunger 4 ist durch eine Höhenverstellvorrichtung 13 in seiner senkrechten Position relativ zu dem Plungerhalter 8 verstellbar.

Zur Höhenbewegung der Tragsäule 9 ist an dieser eine Konsole 15 angelenkt. Die Konsole 15 ist an einer Seite, die der Befestigung an der Tragsäule 9 gegenüberliegt, mittels zweier senkrecht voneinander beabstandeter Schlitten 16 und 17 an einer senkrechte Führungsschiene 18 auf und ab bewegbar. Als Antrieb für die Hubbewegung der Konsole 15 ist ein Elektroservomotor 21 an dem Rahmen 12 montiert. Der Elektroservomotor 21 ist programmierbar steuerbar und treibt über eine Kupplung 20 eine axial festgelegte Spindel 22 an, die parallel zu dem Plunger 4 und der Tragsäule 9 angeordnet ist. Die Spindel 22 ist in einem an dem Rahmen 12 befestigten Lagergehäuse 19 gelagert und steht mit einer gegen Eigendrehung gesicherten Mutter 23, die an der Konsole 15 montiert ist, im Eingriff.

Zwischen der Führungsschiene 18 und der Tragsäule 9 ist benachbart zu der Spindel 22 eine pneumatische Kolben-Zylinder-Einheit 26 angeordnet. Ein Zylinder 27 der Einheit 26 ist mit einem Ende 33 an dem Rahmen 12 befestigt, während eine Kolbenstange 25 der Einheit 26 mit einem Ende 34 an der Konsole 15 angreift. Eine Unterseite 29 eines Kolbens 28 der Einheit 26 ist ständig mit einer Druckluftquelle 30 verbunden, während eine Oberseite 31 des Kolbens 28 über einen Schalldämpfer 32 ständig mit der Atmosphäre verbunden ist.

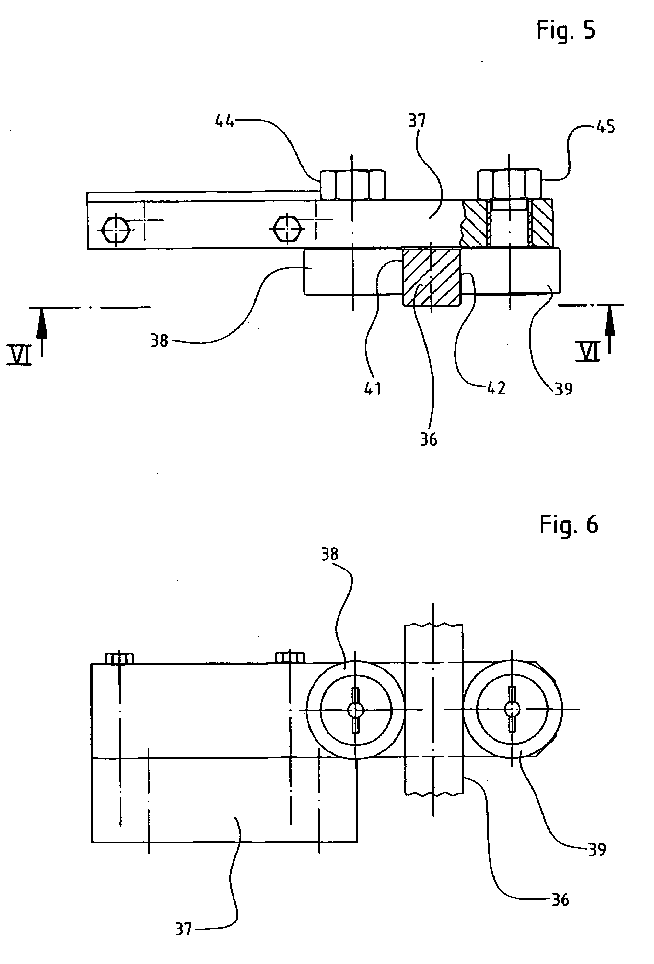

Von einem rückwärtigen Fortsatz 35 des ersten Teils 14 des Plungerhalters 8 erstreckt sich parallel zu der Tragsäule 9 eine im Querschnitt quadratische Sicherungsschiene 36 nach unten. Wie insbesondere aus den Fig. 5 und 6 ersichtlich ist, sind an einer Halterung 37 des Rahmens 12 zwei Sicherungsrollen 38 und 39 mit jeweils einer Schraube 44 bzw. 45 frei drehbar befestigt. Wenn die Sicherungsschiene 36 zusammen mit der Tragsäule 9 die Hubbewegung für den Plunger 4 erfährt, rollen die Sicherungsrollen 38 und 39 entlang gegenüberliegenden Flächen 41 und 42 der Sicherungsschiene 36 ab, so dass eine Drehung der Tragsäule 9 um ihre Längsachse 43 verhindert ist. Ein Tiefenanschlag 46 dient als Wegbegrenzer, indem auf ihm eine Unterseite 47 der Konsole 15 aufsetzen kann und dadurch die senkrechte Abwärtsbewegung des Plungerhalters 8 begrenzt wird.

Ferner sind an dem rückwärtigen Fortsatz 35 des Plungerhalters 8 Mittel 50 zur waagerechten Einstellung des Plungerhalters 8 in einer waagerechten Ebene angeordnet.

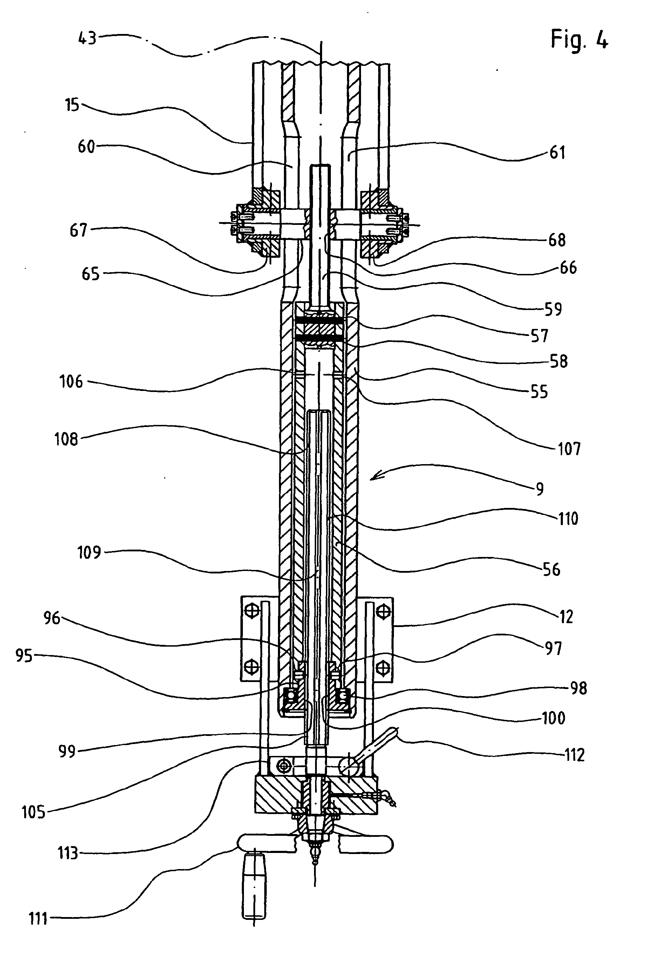

Wie in Fig. 4 gezeigt ist, weist die Tragsäule 9 ein Außenrohr 55 auf, das mit dem Plungerhalter 8 verbunden ist (siehe Fig. 1). In dem Außenrohr 55 ist konzentrisch ein Innenrohr 56 (Fig. 4) angeordnet. Mittels zweier Stifte 57 und 58 ist an einem oberen Ende des Innenrohrs 56 eine Einstellspindel 59 befestigt. Im Bereich der Einstellspindel 59 weist das Außenrohr 55 zwei gegenüberliegende, parallel zu der Längsachse 43 des Außenrohrs 55 angeordnete Langlöcher 60 und 61 auf. Quer durch die Langlöcher 60, 61 erstreckt sich ein runder Bolzen 65 mit waagerechter Längsachse. Die Einstellspindel 59 steht mit einer mit der Längsachse 43 des Außenrohrs 55 konzentrischen Gewindebohrung 66 des Bolzens 65 im Eingriff.

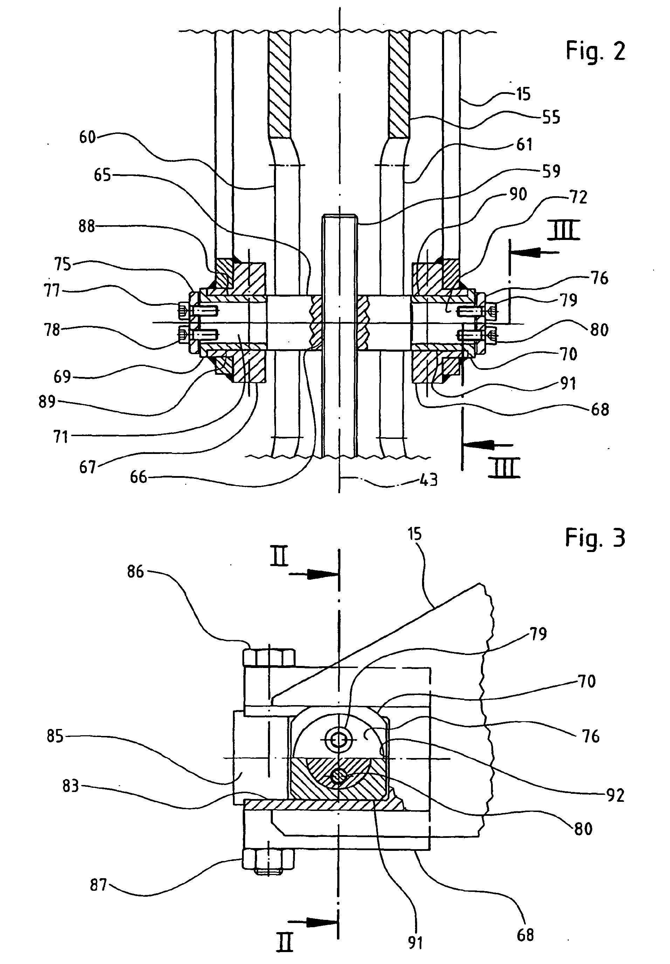

Der Bolzen 65 ist außerhalb des Außenrohrs 55 mit der Konsole 15 verbunden, wie dies detailliert in den Fig. 2 und 3 dargestellt ist. Die Konsole 15 weist zwei angeschweißte Lageraufnahmen 67 und 68 auf, die alternativ auch angegossen sein könnten. In den Lageraufnahmen 67, 68 ist jeweils eine Lagerbuchse 69 bzw. 70 angeordnet. Mit jeweils einem Zapfen 71 bzw. 72 ist der Bolzen 65 drehbar in den Lagerbuchsen 69 und 70 gelagert. An seinen beiden Enden ist der Bolzen 65 durch jeweils einen Deckel 75 bzw. 76, der mittels Schrauben 77 und 78 bzw. 79 und 80 an den Zapfen 71, 72 befestigt ist, gegen ein axiales Verschieben gesichert.

Die Lageraufnahmen 67 und 68 weisen jeweils einen waagerechten Aufnahmeschlitz auf. In Fig. 3 ist der waagerechte Schlitz der Lageraufnahme 68 dargestellt und mit 83 bezeichnet. In den Aufnahmeschlitzen 83 der Lageraufnahmen 67 und 68 und somit der Konsole 15 ist jeweils ein Füllstück 85 angeordnet. Jedes Füllstück 85 wird mittels einer Durchgangsschraube mit zugehöriger Mutter gehalten. Eine der Durchgangschrauben und die zugehörige Mutter sind in Fig. 3 gezeigt und mit 86 bzw. 87 bezeichnet. Die Lagerbuchsen 69 und 70 weisen oben und unten jeweils eine waagerechte Gleitfläche 88, 89, 90 und 91 auf, die in Gleitberührung mit den Aufnahmeschlitzen 83 stehen, so dass jede Lagerbuchse 69, 70 zwischen dem jeweiligen Füllstück 85 und einer senkrechten Begrenzungswand 92 des jeweiligen Aufnahmeschlitzes 83 verschiebbar ist. Dadurch ist der Bolzen 65 relativ zu den Aufnahmeschlitzen 83 der Lageraufnahmen 67 und 68 in einer waagerechten Ebene begrenzt bewegbar.

Das Innenrohr 56 weist gemäß Fig. 4 an einem unteren Ende eine Buchse 95 auf, die mittels Kerbstiften 96 und 97 an dem Innenrohr 56 befestigt ist. Ein Axiallager 98, das zwischen der Buchse 95 und dem Außenrohr 55 angeordnet ist, ermöglicht eine reibungsarme Drehung des Innenrohrs 56 relativ zu dem Außenrohr 55.

Die Buchse 95 weist innen parallel zu der Längsachse 43 des Innenrohrs 56 verlaufende Führungsnuten auf, von denen in Fig. 4 zwei dargestellt und mit 99 und 100 bezeichnet sind.

An dem Rahmen 12 ist eine drehbare, axial festgelegte Welle 105 angeordnet, die sich von unten koaxial in das Innenrohr 56 erstreckt, welches im Bereich der Befestigung der Einstellspindel 59 Bohrungen 106 und 107 zur Be- und Entlüftung aufweist. Die Welle 105 besitzt auf ihrem Umfang parallel zu der Längsachse 43 angeordnete Führungskeile, von denen in Fig. 4 drei dargestellt und mit 108, 109 und 110 bezeichnet sind. Jeder Führungskeil 108, 109, 110 greift in eine der Führungsnuten 99, 100 des Innenrohrs 56 ein.

Mittels eines Handrades 111 kann die Welle 105 hin und her gedreht werden, um eine Höhengrundeinstellung des Plungerhalters 8 zu erreichen. Mittels eines durch einen Hebel 112 betätigbaren Klemmrings 113 lässt sich die Welle 105 fixieren.

Eine durch den Elektroservomotor 21 erzeugte Hubbewegung der Konsole 15 wird über den Bolzen 65 und die Einstellspindel 59 auf das Innenrohr 56 übertragen. Indem das Innenrohr 56 axial relativ zu dem Außenrohr 55 festgelegt ist, wird die Hubbewegung auf das Außenrohr 55 und damit auf den Plungerhalter 8 übertragen. Die Be- und Entlüftungsbohrungen 106, 107 des Innenrohrs 56 erlauben die damit verbundene axiale Relativbewegung der Welle 105 in dem Innenrohr 56. Die Kolben-Zylinder-Einheit 26 sorgt für einen weitgehenden Ausgleich des Gewichts der Konsole 15, der Tragsäule 9 und der durch die Tragsäule 9 getragenen Elemente bei der Hubbewegung.

## Patentansprüche

1. Vorrichtung (5) zum periodischen senkrechten Auf- und Abbewegen wenigstens eines Plungers (4) in einem Speiserkopf (2) eines Speisers (1) für eine Glasformmaschine, um das Ausströmen schmelzflüssigen Glases aus dem Speiserkopf (2) zu beeinflussen,
wobei der wenigstens eine Plunger (4) an einem sich im wesentlichen waagerecht erstreckenden Plungerhalter (8) angeordnet ist,
wobei eine an einem vorrichtungsfesten Rahmen (12) senkrecht auf und ab bewegbar gelagerte Tragsäule (9) in einem waagerechten Abstand von dem wenigstens einen Plunger (4) angeordnet ist,
wobei an dem Rahmen (12) eine senkrechte Führungsschiene (18) in einem waagerechten Abstand von dem wenigstens einen Plunger (4) und der Tragsäule (9) befestigt ist,
wobei eine Konsole (15) an der Führungsschiene (18) auf und ab bewegbar geführt ist,
wobei durch einen vorrichtungsfesten, programmierbar steuerbaren Elektromotor (21) eine axial festgelegte Spindel (22) hin und her drehend antreibbar ist,
wobei der Elektromotor (21) an dem Rahmen (12) montiert ist,
wobei die Spindel (22) parallel zu und in waagerechtem Abstand von dem wenigstens einen Plunger (4) und der Tragsäule (9) angeordnet ist,
wobei mit der Spindel (22) eine gegen Eigendrehung gesicherte Mutter (23) im Eingriff steht,
wobei die Mutter (23) an der Konsole (15) montiert ist,
wobei eine durch die Drehung der Spindel (22) erzeugte Hubbewegung der Mutter (23) auf die Tragsäule (9) und den Plungerhalter (8) übertragbar ist,
**dadurch gekennzeichnet, dass** die Konsole (15) an der Tragsäule (9) zu deren Höhenbewegung angelenkt ist und der Plungerhalter (8) durch die Tragsäule (9) getragen ist.

2. Vorrichtung nach Anspruch 1,
**dadurch gekennzeichnet, dass** der Elektromotor als Elektroservomotor (21) ausgebildet ist.

3. Vorrichtung nach Anspruch 1 oder 2,
**dadurch gekennzeichnet, dass** die Konsole (15) zwei in senkrechtem Abstand voneineinander angeordnete, an der Führungsschiene (18) geführte Schlitten (16,17) aufweist.

4. Vorrichtung nach einem der Ansprüche 1 bis 3,
**dadurch gekennzeichnet, dass** zwischen der Führungsschiene (18) und der Tragsäule (9) eine pneumatische Kolben-Zylinder-Einheit (26) angeordnet ist,
**dass** die Kolben-Zylinder-Einheit (26) mit ihrem einen Ende (33) an dem Rahmen (12) und mit ihrem anderen Ende (34) an der Konsole (15) angreift,
**dass** eine Unterseite (29) eines Kolbens (28) der Kolben-Zylinder-Einheit (26) ständig mit einer Druckluftquelle (30) verbunden ist,
und **dass** eine Oberseite (31) des Kolbens (28) ständig mit der Atmosphäre verbunden ist.

5. Vorrichtung nach einem der Ansprüche 1 bis 4,
**dadurch gekennzeichnet, dass** sich von einem rückwärtigen Fortsatz (35) des Plungerhalters (8) im Abstand von der Tragsäule (9) eine Sicherungsschiene (36) senkrecht nach unten erstreckt,
und dass an dem Rahmen (12) wenigstens eine im Eingriff mit der Sicherungsschiene (36) stehende, eine Drehung der Tragsäule (9) um ihre Längsachse (43) verhindernde Sicherungsrolle (38,39) drehbar gelagert ist.

6. Vorrichtung nach einem der Ansprüche 1 bis 5,
**dadurch gekennzeichnet, dass** die Tragsäule (9) ein mit dem Plungerhalter (8) verbundenes Außenrohr (55) und ein in radialem Abstand von und relativ zu dem Außenrohr (55) um seine Längsachse (43) drehbares Innenrohr (56) aufweist,
**dass** das Außenrohr (55) oberhalb des Innenrohrs (56) zwei gegenüberliegende, parallel zu der Längsachse (43) des Außenrohrs (55) angeordnete Langlöcher (60,61) aufweist,
**dass** sich quer durch die Langlöcher (60,61) ein Bolzen (65) mit waagerechter Längsachse erstreckt,
**dass** der Bolzen (65) außerhalb des Außenrohrs (55) mit der Konsole (15) verbunden ist und eine mit der Längsachse (43) des Außenrohrs (55) konzentrische Gewindebohrung (66) aufweist,
**dass** mit der Gewindebohrung (66) eine an einem oberen Ende des Innenrohrs (56) befestigte Einstellspindel (59) im Eingriff steht,
**dass** an dem Innenrohr (56) innen wenigstens eine parallel zu der Längsachse (43) des Innenrohrs (56) verlaufende Führungsnut (99,100) vorgesehen ist,
**dass** sich eine an dem Rahmen (12) drehbar angeordnete und axial festgelegte Welle (105) von unten koaxial in das Innenrohr (56) erstreckt,
**dass** die Welle (105) wenigstens einen parallel zu der Längsachse (43) des Innenrohrs (56) verlaufenden äußeren Führungskeil (108,109,110) aufweist, wobei jeder Führungskeil (108,109,110) in eine Führungsnut (99,100) eingreift,
und **dass** die Welle (105) zur Erzielung einer Höhengrundeinstellung des wenigstens einen Plungers (4) hin oder her drehbar ist.

7. Vorrichtung nach Anspruch 6,
**dadurch gekennzeichnet, dass** zwischen dem Außenrohr (55) und dem Innenrohr (56) ein Axiallager (98) angeordnet ist.

8. Vorrichtung nach Anspruch 6 oder 7,
**dadurch gekennzeichnet, dass** jede eingestellte Höhengrundeinstellung durch eine die weitere Drehung der Welle (105) blockierende, an dem Rahmen (12) befestigte Klemmvorrichtung (112,113) fixierbar ist.

9. Vorrichtung nach einem der Ansprüche 6 bis 8,
**dadurch gekennzeichnet, dass** der Bolzen (65) außerhalb des Außenrohrs (55) jeweils in einer Lagerbuchse (69,70) drehbar gelagert ist,
**dass** jede Lagerbuchse (69,70) oben und unten eine waagerechte Gleitfläche (88,89,90,91) aufweist,
und **dass** die Gleitflächen (88,89,90,91) jeder Lagerbuchse (69,70) in Gleitberührung mit jeweils einem waagerechten Aufnahmeschlitz (83) der Konsole (15) stehen.

10. Vorrichtung nach Anspruch 9,
**dadurch gekennzeichnet, dass** ein offenes Ende jedes Aufnahmeschlitzes (83) durch ein Füllstück (85) schließbar ist,
und **dass** jede Lagerbuchse (69,70) jeweils zwischen dem Füllstück (85) und einer senkrechten Begrenzungswand (92) des Aufnahmeschlitzes (83) mit Spiel waagerecht verschiebbar ist.

## Claims

1. Device (5) for the periodic vertical upwards and downwards movement of at least one plunger (4) in a feeder head (2) of a feeder (1) for a glass forming machine, in order to influence the flow of molten glass out of the feeder head (2),
wherein the at least one plunger (4) is disposed on a plunger holder (8) which extends substantially horizontally,
wherein a support column (9) which is mounted in such a manner as to be able to move vertically up and down on a frame (12) which is fixed to the device is disposed at a horizontal spaced interval from the at least one plunger (4),
wherein a vertical guide rail (18) is attached to the frame (12) at a horizontal spaced interval from the at least one plunger (4) and the support column (9),
wherein a bracket (15) is guided in such a manner as to be able to move up and down on the guide rail (18),
wherein an axially fixed spindle (22) can be driven rotationally in a reciprocating manner by means of an electric motor (21) which is fixed to the device and can be programmably controlled,
wherein the electric motor (21) is mounted on the frame (12),
wherein the spindle (22) is disposed in parallel with and at a horizontal spaced interval from the at least one plunger (4) and the support column (9),
wherein a nut (23) which is secured against intrinsic rotation is in engagement with the spindle (22),
wherein the nut (23) is mounted on the bracket (15),
wherein a lifting movement of the nut (23) as generated by the rotation of the spindle (22) can be transmitted to the support column (9) and to the plunger holder (8),
**characterised in that** the bracket (15) is articulated to the support column (9) for the height movement thereof and the plunger holder (8) is supported by the support column (9).

2. Device as claimed in claim 1, **characterised in that** the electric motor is formed as an electric servomotor (21).

3. Device as claimed in claim 1 or 2, **characterised in that** the bracket (15) comprises two slides (16, 17) which are disposed at a vertical spaced interval from each other and are guided on the guide rail (18).

4. Device as claimed in any one of claims 1 to 3, **characterised in that** a pneumatic piston-cylinder-unit (26) is disposed between the guide rail (18) and the support column (9),
**in that** one end (33) of the piston-cylinder-unit (26) engages the frame (12) and the other end (34) of said piston-cylinder-unit engages the bracket (15),
**in that** an underside (29) of a piston (28) of the piston-cylinder-unit (26) is continuously connected to a compressed air source (30),
and **in that** a topside (31) of the piston (28) is continuously connected to the atmosphere.

5. Device as claimed in one of claims 1 to 4, **characterised in that** a safety rail (36) extends vertically downwards from a rearward extension (35) of the plunger holder (8) at a spaced interval from the support column (9),
and **in that** at least one safety roller (38) which is in engagement with the safety rail (36) and prevents rotation of the support column (9) about its longitudinal axis (43) is mounted in a rotatable manner on the frame (12).

6. Device as claimed in any one of claims 1 to 5, **characterised in that** the support column (9) comprises an outer pipe (55), which is connected to the plunger holder (8), and an inner pipe (56) which is rotatable at a radial spaced interval from and relative to the outer pipe (55) about its longitudinal axis (43),
**in that** the outer pipe (55) comprises above the inner pipe (56) two opposite-lying elongated holes (60, 61) which are arranged in parallel with the longitudinal axis (43) of the outer pipe (55),
**in that** a pin (65) having a horizontal longitudinal axis extends transversely through the elongated holes (60, 61),
**in that** the pin (65) is connected outside the outer pipe (55) to the bracket (15) and comprises a threaded bore (66) which is concentric with the longitudinal axis (43) of the outer pipe (55),
**in that** an adjusting spindle (59) which is attached to an upper end of the inner pipe (56) is in engagement with the threaded bore (66),
**in that** the inner pipe (56) is provided on the inside with at least one guide groove (99, 100) which extends in parallel with the longitudinal axis (43) of the inner pipe (56),
**in that** a shaft (105) which is rotatably disposed and axially fixed on the frame (12) extends from below in a coaxial manner into the inner pipe (56),
**in that** the shaft (105) comprises at least one outer guide wedge (108, 109, 110) which extends in parallel with the longitudinal axis (43) of the inner pipe (56), wherein each guide wedge (108, 109, 110) engages into a guide groove (99, 100),
and **in that** the shaft (105) is rotatable in a reciprocating manner in order to achieve a basic height adjustment of the at least one plunger (4).

7. Device as claimed in claim 6, **characterised in that** an axial bearing (98) is disposed between the outer pipe (55) and the inner pipe (56).

8. Device as claimed in claim 6 or 7, **characterised in that** each set basic height adjustment can be fixed by a clamping device (112, 113) which blocks the further rotation of the shaft (105) and is attached to the frame (12).

9. Device as claimed in any one of claims 6 to 8, **characterised in that** the pin (65) outside the outer pipe (55) is disposed in a rotatable manner in each case in a bearing bushing
(69, 70),
**in that** each bearing bushing (69, 70) comprises at the top and at the bottom a horizontal slide surface (88, 89, 90, 91),
and **in that** the slide surfaces (88, 89, 90, 91) of each bearing bushing (69, 70) are in sliding contact in each case with a horizontal receiving slot (83) of the bracket (15).

10. Device as claimed in claim 9, **characterised in that** an open end of each receiving slot (83) can be closed by a filling piece (85),
and **in that** each bearing bushing (69, 70) can be displaced horizontally with clearance in each case between the filling piece (85) and a vertical boundary wall (92) of the receiving slot (83).

## Revendications

1. Appareil (5) pour soulever et abaisser verticalement périodiquement au moins un plongeur (4) dans une tête de distributeur (2) d'un distributeur (1) pour une machine à façonner le verre, destiné à influer sur l'écoulement de verre fondu fluide hors de la tête de distributeur (2),
dans lequel le plongeur (4) au nombre d'un au moins est disposé sur un support de plongeur (8) sensiblement horizontal,
dans lequel un montant de support (9) supporté de manière mobile verticalement vers le haut et le bas sur un bâti (12) solidaire de l'appareil est disposé à distance dans le sens horizontal du plongeur (4) au nombre d'un au moins,
dans lequel un rail de guidage (18) vertical est fixé sur le bâti (12) à distance dans le sens horizontal du plongeur (4) au nombre d'un au moins et du montant de support (9),
dans lequel une console (15) est guidée de manière mobile vers le haut et le bas sur le rail de guidage (18),
dans lequel une tige (22) fixée dans le sens axial peut être entraînée en rotation en va-et-vient par un moteur électrique (21) à commande programmable fixé à l'appareil,
dans lequel le moteur électrique (21) est monté sur le bâti (12),
dans lequel la tige (22) est disposée parallèlement au plongeur (4) au nombre d'un au moins et au montant de support (9) et à distance dans le sens horizontal de ceux-ci,
dans lequel la tige (22) est en prise avec un écrou (23) qui est empêché de tourner,
dans lequel l'écrou (23) est monté sur la console (15),
dans lequel un mouvement de course de l'écrou (23) provoqué par la rotation de la tige (22) peut être transmis au montant de support (9) et au support de plongeur (8),
**caractérisé en ce que** la console (15) est articulée sur le montant de support (9) en vue du mouvement vertical de celui-ci et le support de plongeur (8) est retenu par le montant de support (9).

2. Appareil selon la revendication 1, **caractérisé en ce que** le moteur électrique est conçu comme un servomoteur électrique (21).

3. Appareil selon la revendication 1 ou 2, **caractérisé en ce que** la console (15) possède deux chariots (16, 17) disposés à distance l'un de l'autre dans le sens vertical et guidés sur le rail de guidage (18).

4. Appareil selon l'une ou l'ensemble des revendications 1 à 3, **caractérisé en ce qu'**une unité de vérin (26) est disposée entre le rail de guidage (18) et le montant de support (9),
**en ce que** l'unité de vérin (26) se met en prise par une extrémité (33) sur le bâti (12) et par l'autre extrémité (34) sur la console (15),
**en ce qu'**une face inférieure (29) d'un piston (28) de l'unité de vérin (26) communique en permanence avec une source d'air comprimé (30),
**et en ce qu'**une face supérieure (31) du piston (28) communique en permanence avec l'atmosphère.

5. Appareil selon l'une ou l'ensemble des revendications 1 à 4, **caractérisé en ce qu'**un rail de fixation (36) s'étend verticalement vers le bas à partir d'une saillie postérieure (35) du support de plongeur (8) à distance du montant de support (9),
**et en ce qu'**il est prévu sur le bâti (12) au moins un galet de fixation (38, 39) supporté avec possibilité de rotation qui est en prise avec le rail de fixation (36) et empêche la rotation du montant de support (9) autour de son axe longitudinal (43).

6. Appareil selon l'une ou l'ensemble des revendications 1 à 5, **caractérisé en ce que** le montant de support (9) possède un tube extérieur (55) relié au support de plongeur (8) et un tube intérieur (56) capable de tourner autour de son axe longitudinal (43) à distance dans le sens radial du tube extérieur (55) et par rapport à celui-ci,
**en ce que** le tube extérieur (55) possède au-dessus du tube intérieur (56) deux trous allongés (60, 61) se faisant face et disposés parallèlement à l'axe longitudinal (43) du tube extérieur (55),
**en ce qu'**un goujon (65) dont l'axe longitudinal est horizontal s'étend à travers les trous allongés (60, 61),
**en ce que** le goujon (65) est relié à l'extérieur du tube extérieur (55) à la console (15) et possède un alésage fileté (66) concentrique de l'axe longitudinal (43) du tube extérieur (55),
**en ce qu'**une tige de réglage (59) fixée à une extrémité supérieure du tube intérieur (56) est en prise avec l'alésage fileté (66),
**en ce qu'**il est prévu sur l'intérieur du tube intérieur (56) au moins une gorge de guidage (99, 100) parallèle à l'axe longitudinal (43) du tube intérieur (56),
**en ce qu'**un arbre (105) disposé avec possibilité de rotation sur le bâti (12) et fixe dans le sens axial s'étend par le bas dans le tube intérieur (56) de façon coaxiale,
**en ce que** l'arbre (105) possède au moins un coin de guidage extérieur (108, 109, 110) parallèle à l'axe longitudinal (43) du tube intérieur (56), chaque coin de guidage (108, 109, 110) se mettant en prise dans une gorge de guidage (99, 100),
et **en ce que** l'arbre (105) peut tourner dans un sens ou dans l'autre pour obtenir un réglage de base en hauteur du plongeur (4) au nombre d'un au moins.

7. Appareil selon la revendication 6, **caractérisé en ce qu'**un roulement axial (98) est disposé entre le tube extérieur (55) et le tube intérieur (56).

8. Appareil selon la revendication 6 ou 7, **caractérisé en ce que** chaque position de base en hauteur réglée peut être fixée par un dispositif de serrage (112, 113) fixé au bâti (12) et empêchant l'arbre (105) de tourner davantage.

9. Dispositif selon l'une ou l'ensemble des revendications 6 à 8, **caractérisé en ce que** le goujon (65) est supporté avec possibilité de rotation dans une douille de palier (69, 70) à l'extérieur du tube extérieur (55),
**en ce que** chaque douille de palier (69, 70) possède en haut et en bas une surface de glissement (88, 89, 90, 91) horizontale,
et **en ce que** les surfaces de glissement (88, 89, 90, 91) de chaque douille de palier (69, 70) se trouvent chacune en contact coulissant avec une fente de réception (83) horizontale de la console (15).

10. Appareil selon la revendication 9, **caractérisé en ce qu'**une extrémité ouverte de chaque fente de réception (83) peut être fermée par un élément obturateur (85)
et **en ce que** chaque douille de palier (69, 70) peut être déplacée horizontalement entre l'élément obturateur (85) et une paroi de délimitation verticale (92) de la fente de réception (83) avec un certain jeu.
